# FASCICULE DE BREVET EUROPEEN

(11) **EP 0 524 105 B1**
(45) Date de publication et mention de la délivrance du brevet: **06.09.1995**
(21) Numéro de dépôt: 92402072.0
(22) Date de dépôt: 17.07.1992
(51) Int. Cl.: B60Q 1/068, F16B 21/02

(54) **Organe de manoeuvre indémontable, notamment pour le réglage d'orientation de faisceau d'un projecteur de véhicule automobile**
Nichtabmontierbares Zwischenstück, insbesondere zum Einstellen der Orientierung von Fahrzeugscheinwerfern
Adjusting mechanism, fixedly mounted to a body, in particular for adjusting the orientation of vehicle headlights

(30) Priorité: 19.07.1991 FR 9109156
(43) Date de publication de la demande: 20.01.1993
(73) Titulaire: VALEO VISION, 93012 Bobigny Cédex (FR)
(72) Inventeur: Fischer, François, F-94160 Saint-Mande (FR)
(74) Mandataire: Martin, Jean-Jacques

(56) Documents cités:
- EP-A- 0 431 803
- DE-A- 1 475 042
- DE-U- 8 420 217
- US-A- 4 393 551

## Description

La présente invention concerne d'une façon générale les organes de manoeuvre, notamment mais non exclusivement pour le réglage de l'orientation des faisceaux de projecteurs de véhicules automobiles.

Un bouton ou vis de manoeuvre pour le réglage de l'orientation d'un projecteur est généralement constitué par plusieurs pièces séparées qui sont assemblées les unes aux autres lors du montage dans une ouverture pratiquée dans une paroi du boîtier du projecteur. Il en résulte un coût et un temps de montage importants.

Par ailleurs la plupart des organes de manoeuvre connus peuvent être facilement démontés par l'utilisateur du véhicule à l'aide d'un outillage simple approprié, ce qui est indésirable car l'intervention d'un non spécialiste dans les systèmes de réglage d'orientation, et notamment un remontage incorrect, peut conduire à un faisceau mal réglé et non conforme aux règlements.

Enfin certains organes connus, lorsqu'ils sont réalisés dans un souci d'économie, peuvent conduire à un défaut d'étanchéité entre l'espace intérieur du projecteur et l'environnement extérieur.

On connaît en outre par DE-U-8 420 217 un organe de manoeuvre conforme au préambule de la revendication 1. Un tel organe de manoeuvre, bien que supposé indémontable, peut en fait être aisément démonté à l'aide d'une pince en pressant l'une vers l'autre les deux dents de verrouillage en saillie à partir de son corps central.

La présente invention vise à pallier les inconvénients de la technique antérieure et à proposer un nouvel organe de manoeuvre qui soit d'une construction monobloc simple et économique et qui, une fois son montage effectué par une procédure extrêmement simple, ne puisse pas être démonté, même à l'aide d'outils ordinaires.

Accessoirement, l'invention vise à proposer un organe de manoeuvre qui offre une très bonne étanchéité avec le boitier du projecteur.

Elle concerne à cet effet un organe de manoeuvre, tel que défini dans la revendication 1.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue de dessus en plan d'un organe de manoeuvre selon l'invention,
la figure 2 est une vue de dessous en plan de l'organe de la figure 1,
la figure 3 est une vue en coupe axiale selon la ligne III-III de la figure 2,
la figure 4 est une vue en élévation de côté selon la flèche IV de la figure 2,
la figure 5 est une vue en élévation de côté selon la flèche V de la figure 2,
la figure 6 est une vue en plan de dessous d'une partie d'un boîtier de projecteur sur laquelle doit être monté l'organe des figures 1 à 5,
la figure 7 est une vue en coupe axiale selon la ligne VII-VII de la figure 6, et
la figure 8 est une vue en coupe axiale selon la ligne VIII-VIII de la figure 6.

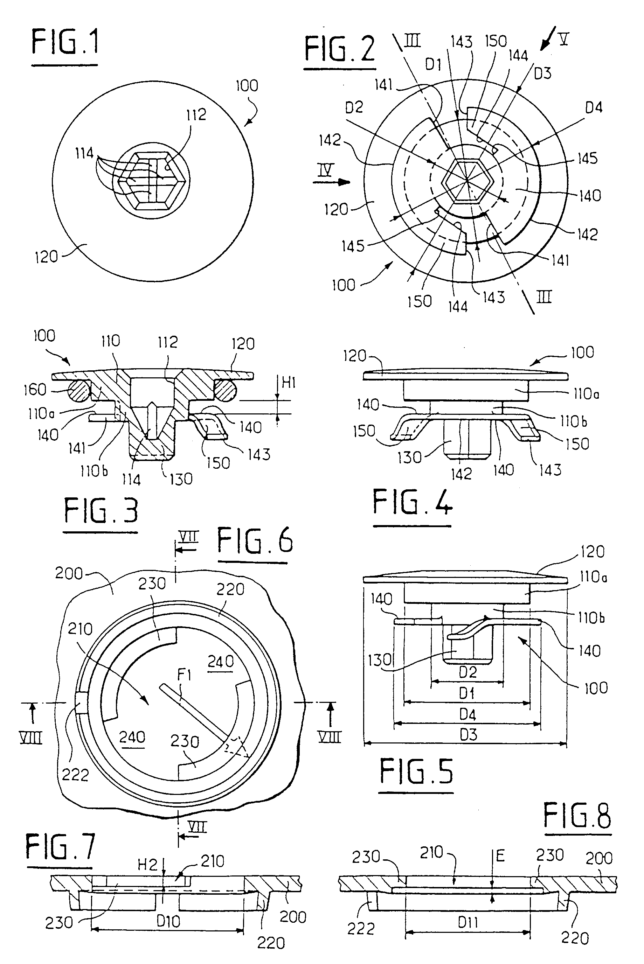

En référence tout d'abord aux figures 1 à 5, on a représenté un organe de manoeuvre 100 qui comprend un corps principal 110, par exemple de révolution, dans lequel est formée une cavité 112 dans laquelle peut être introduite soit l'extrémité d'un tournevis cruciforme, soit une tige à six pans (type clé Allen), pour faire tourner l'organe. La cavité comporte à cet effet, dans une paroi de fond conique, quatre rainures 114 disposées mutuellement à angle droit, et présente au-dessus du fond une section hexagonale telle qu'illustrée sur la figure 1.

Le corps 110 comporte deux parties étagées 110a, 110b, présentant respectivement des diamètres D1 et D2, D2 étant sensiblement inférieur à D1.

Le corps 110 est prolongé en haut par une partie en forme de disque 120 s'étendant tout autour de la cavité et présentant un diamètre D3 sensiblement supérieur à D1.

Le corps 110 est en outre prolongé à son extrémité inférieure par une tête d'accouplement 130 de section non circulaire, et en l'espèce hexagonale, destinée à permettre l'accouplement en rotation entre l'organe 100 et une pièce mobile (non représentée) prévue à l'intérieur d'un projecteur et dont la rotation induit par exemple une modification de l'inclinaison en site ou en azimut du réflecteur de ce projecteur.

L'organe 100 comporte en outre deux ailes 140 de forme identique, décalées angulairement de 180° l'une par rapport à l'autre. Chaque aile s'étend radialement vers l'extérieur à partir de la base de la partie 110b de diamètre réduit D2 du corps. Elle est reliée à cette partie sur une étendue angulaire d'environ 90°. Elle comporte, en vue en plan et dans le sens inverse des aiguilles d'une montre sur la figure 2, un premier bord radial 141, un bord circonférentiel 142 correspondant à un diamètre noté D4 et légèrement supérieur à D1, ayant une étendue angulaire d'environ 150° dans le présent exemple, un deuxième bord radial 143, un bord rentrant 144 longeant le bord circonférentiel sur une étendue angulaire réduite (de l'ordre de 30 à 45)° et dont la distance à l'axe A de l'organe diminue progressivement, et un troisième bord radial 145.

Chaque aile définit ainsi à son extrémité (par rapport à la direction circonférentielle) opposée au bord radial 141 une patte saillante 150 qui, comme le montrent bien les figures 3 à 5 est incurvée vers le bas avec un profil de forme générale sinueuse. De préférence, l'extrémité libre de la patte 150, au niveau du bord 143, rejoint un plan horizontal. De préférence également, les pattes 150 sont réalisées sans rupture de pente.

On note H1 la distance verticale entre la base de la partie 110a du corps 110 et la surface supérieure de la partie plane des ailes 140 (figure 3).

Optionnellement, l'organe 100 est équipé d'un joint d'étanchéité 160, par exemple un joint torique en élastomère tel qu'illustré sur la figure 3.

On va maintenant décrire en référence aux figures 6 à 8 une partie d'un élément 200, par exemple un boîtier de projecteur, comportant une ouverture 210 destinée à recevoir l'organe de manoeuvre. Cette ouverture 210 est bordée circonférentiellement par un muret 220 qui est interrompu sur une courte distance dans une position angulaire donnée, pour définir une encoche 222.

Le muret 220 et son encoche 222 permettent dans la pratique le bon positionnement tant angulaire qu'axial de l'élément mobile situé à l'intérieur du projecteur et avec lequel doit coopérer l'organe de manoeuvre.

L'ouverture 210 est de forme générale cylindrique, avec un diamètre de base D10 qui est légèrement supérieur au diamètre D4 de l'organe 100. Deux nervures 230 s'étendent circonférentiellement dans l'ouverture 210, en étant décalées angulairement de 180°. Les deux nervures ont chacune une étendue angulaire de l'ordre de 105°, et définissent dans cet intervalle angulaire un diamètre réduit de l'ouverture 210, noté D11. Ce diamètre D11 est choisi légèrement supérieur au diamètre D1 de l'organe 100. Entre les bords radiaux d'extrémité des nervures 230 sont donc définis des espaces 240 d'une étendue angulaire de l'ordre de 75°, de diamètre D10.

L'épaisseur H2 de chaque nervure est légèrement inférieure à la distance H1 précitée. Par ailleurs, la distance verticale E entre la face inférieure des nervures 230 et la face inférieure de la paroi 200 du boîtier est de préférence voisine de l'épaisseur des ailes de l'organe 100.

La mise en place de l'organe de manoeuvre 100 dans l'ouverture 210 du boîtier 200 s'effectue de la façon suivante: l'organe 100 est amené au-dessus de l'ouverture 210 en étant placé en biais par rapport à l'axe de l'ouverture. Ensuite, l'organe 100 est introduit partiellement dans l'ouverture 210 de telle sorte que l'une des ailes 140 passe obliquement dans le passage défini par la partie centrale libre de l'ouverture 210 et les espaces 240 précités, ce passage étant permis par le fait que le diamètre D10 est légèrement supérieur à D4. Cette mise en place partielle s'effectue en déplaçant l'organe 100, une fois amené dans la position angulaire appropriée, en translation selon une ligne qui passe approximativement à l'aplomb du milieu des nervures 230 et qui est inclinée d'un certain angle, de faible valeur, par rapport au plan de la paroi 200 (flèche F1).

Lorsque l'organe 100, toujours de biais, est approximativement centré dans l'ouverture 210, l'une des ailes 140 est située pour l'essentiel au-dessus d'une nervure 230 et l'autre aile est située pour l'essentiel au-dessous de l'autre nervure 230, tandis que les pattes 150 se trouvent dans les espaces 240, leurs extrémités libres respectives, grâce à leur profil sinueux, étant situées légèrement plus bas que le plan des nervures 230. Au cours de ce mouvement, on prend soin à ce que la tête 130 de l'organe 100 vienne s'accoupler avec la partie complémentaire du mécanisme de réglage d'orientation (non représentée) située à l'intérieur du projecteur.

Dans cette position, on fait maintenant tourner l'organe 100 sur lui-même dans le sens des aiguilles d'une montre en vue de dessus. Pendant une partie initiale de ce mouvement, les bords d'extrémité libre des pattes 150 viennent s'engager sous les régions de bord radial des nervures 230. En poursuivant ce mouvement, c'est maintenant l'ensemble des ailes 140 qui vient progressivement s'accrocher derrière les nervures 230. Cette opération s'accompagne d'une torsion élastique d'au moins l'une des ailes 140 et le cas échéant des nervures 230.

En effet, au cours de ce mouvement de rotation, l'aile 140 qui a été placée au-dessous de l'une des nervures 230 au cours du positionnement initial est à cheval sur les deux nervures en étant située entièrement sous celles-ci, tandis que l'autre aile 140 est située dans sa région avant sous une nervure 230 et dans sa région arrière encore au-dessus de l'autre nervure 230. On comprend que, dans cette situation, les ailes 140 ne peuvent être situées dans un même plan. Bien entendu, on prend soin à utiliser pour l'organe 100 un matériau - préférentiellement une matière plastique - ayant l'élasticité appropriée, ainsi qu'une épaisseur convenable pour les ailes 140.

A la fin de la rotation, l'aile 140 dont la partie arrière est encore située au-dessus de l'une des nervures 230 voit son bord radial 141 (bord de fuite) arriver au droit du bord radial de fuite de la nervure 230 considérée. Aucune contrainte ne s'oppose alors à ce que les ailes 140 reprennent leur état d'origine, dans un plan commun à l'exception des pattes 150, et celles-ci sont maintenant entièrement situées au-dessous des nervures. Dans cette position, l'axe de l'organe 100 a subitement basculé pour se confondre avec celui de l'ouverture 210, et le joint d'étanchéité 160 est maintenant, grâce au choix approprié notamment des distances H1 et H2 et de l'épaisseur dudit joint, comprimé entre la face inférieure de la partie 120 de l'organe 100 et la face supérieure de la paroi 200 autour de l'ouverture 210. On peut alors faire tourner librement l'organe 100 à l'aide d'un outil, comme décrit plus haut, pour communiquer ce mouvement au mécanisme de commande d'orientation et effectuer le réglage du projecteur.

On observera ici, selon une caractéristique essentielle de l'invention, que l'organe 100 ne peut pratiquement plus être démonté sans équipement ou savoir-faire particulier. En effet, l'étendue angulaire des espaces 240 est sensiblement inférieure à celle des ailes 140, si bien que quelle que soit la position angulaire de l'organe 100, il ne peut être extrait de son logement par simple traction vers le haut. En fait, pour pouvoir démonter l'organe, il serait nécessaire de tirer vers le haut la région du bord radial 141 de l'une des ailes 140 puis par rotation la faire passer au-dessus de la nervure considérée. Mais les ailes 140 sont devenues totalement inaccessibles de l'extérieur.

Ainsi la présente invention propose un organe de manoeuvre qui, tout en étant indémontable, est extrêmement facile à mettre en place.

Bien entendu, la présente invention n'est nullement limitée à la forme de réalisation décrite ci-dessus et représentée sur les dessins, mais l'homme de l'art saura y apporter toute variante ou modification conforme à son esprit.

En particulier, la forme et la dimension des divers éléments et parties décrits ci-dessus pourra largement varier sans sortir du cadre de l'invention. Notamment, dans certains cas, au moins une des pattes saillantes 150 peut être omise. En outre, au moins l'une de ces pattes peut s'étendre dans le plan des ailes 140.

Par ailleurs, on notera que les termes "horizontal", "vertical", "dessus", "dessous", etc..., utilisés dans toute la description sont à interpréter dans un sens relatif, correspondant au cas particulier où l'organe de manoeuvre est amené à partir du dessus dans une ouverture formée dans une paroi supérieure d'un boîtier de projecteur ou analogue.

## Revendications

1. Organe de manoeuvre (100), notamment pour la transmission d'un mouvement de rotation pour le réglage de l'orientation du faisceau d'un projecteur de véhicule automobile et destiné à etre monté dans une ouverture (210) formée dans une paroi (200) du projecteur, comprenant un corps central (110) comportant des moyens d'accouplement (112; 130) pour pouvoir être reçu dans l'ouverture dans une position indémontable, caractérisé en ce qu'à partir du corps central fait saillie latéralement au moins une aile mince essentiellement plane (140) ayant un premier diamètre (D4) égal ou légèrement inférieur à un diamètre (D10) de l'ouverture et une première étendue angulaire, et en ce que l'organe de manoeuvre est apte à coopérer avec une ouverture (210) comportant au moins une nervure (230) s'étendant vers l'intérieur à partir de son bord périphérique et définissant au niveau de son bord intérieur un second diamètre (D11) intérieur audit premier diamètre (D4), entre les extrémités de la ou des nervures étant défini au moins un espace (210) d'une seconde étendue angulaire inférieure à ladite première étendue angulaire, l'organe de manoeuvre étant apte à etre positionné de biais dans l'ouverture selon une translation telle qu'une aile, traversant l'ouverture au niveau d'un espace, soit amenée au-dessous d'une nervure, puis à etre mis en rotation de manière que la ou chaque aile s'accroche progressivement au-dessous de la ou de chaque nervure.

2. Organe de manoeuvre selon la revendication 1, caractérisé en ce qu'il comprend deux ailes minces (140) décalées angulairement d'environ 180° l'une par rapport à l'autre, ainsi que deux nervures (230) également décalées angulairement d'environ 180° l'une par rapport à l'autre et définissant deux espaces (240) de la seconde étendue angulaire,

3. Organe de manoeuvre selon la revendication 1 ou 2, caractérisé en ce que la ou chaque aile (140) comporte à une extrémité une patte saillante (150) dans la direction circonférentielle.

4. Organe de manoeuvre selon la revendication 2, caractérisé en ce que la ou chaque patte saillante (150) présente une extrémité libre située au-dessous du plan desdites ailes.

5. Organe de manoeuvre selon la revendication 4, caractérisé en ce que la ou chaque patte saillante (150) présente un profil sinueux sans rupture de pente.

6. Organe de manoeuvre selon l'une des revendications 1 à 5, caractérisé en ce que l'organe de manoeuvre (100) et l'ouverture associée (210) présentent une symétrie de rotation de 180°.

7. Organe de manoeuvre selon l'une des revendications 1 à 6, caractérisé en ce que le corps central (110) est surmonté par une partie en forme de disque (120) de diamètre (D1) sensiblement supérieur à celui de l'ouverture.

8. Organe de manoeuvre selon la revendication 7, caractérisé en ce qu'un joint d'étanchéité (160) est prévu au-dessous de la partie en forme de disque (120) et autour dudit corps central (110).

9. Organe de manoeuvre selon l'une des revendications 1 à 8, caractérisé en ce que les moyens d'accouplement comportent, dans sa région supérieure du corps central, une cavité (112) pour l'introduction d'un outil de manoeuvre.

10. Organe de manoeuvre selon l'une des revendications 1 à 9, caractérisé en ce que les moyens d'accouplement comportent, dans la région inférieure du corps central (110), une partie (130) d'accouplement de l'organe de manoeuvre avec un dispositif de réglage d'orientation prévu à l'intérieur du projecteur.

11. Ensemble constitué par un organe de manoeuvre (100) selon l'une des revendications précédentes et un boîtier de projecteur (200) comportant une ouverture telle que définie dans l'une des revendications précédentes.

## Claims

1. A control member (100), in particular for transmitting rotational movement for adjusting the alignment of a motor vehicle headlight beam and intended for fitting in an opening (210) formed in a wall (200) of the headlight, the control member including a central body (110) comprising coupling means (112; 130) which can be received in the opening in a position in which the control member cannot be removed, the control member being characterized in that there protrudes laterally from the central body at least one thin essentially plane wing (140) having a first angular extent and a first diameter (D4) equal to or slightly smaller than a diameter (D10) of the opening, and in that the control member is suitable for co-operating with an opening (210) including at least one rib (230) extending inwardly from its peripheral edge and defining at its inside edge a second diameter (D11) inside said first diameter (D4), there being defined between the ends of the rib or ribs at least one space (210) having a second angular extent less than said first angular extent, the control member being suitable for positioning at an oblique angle in the opening by a translational movement such that one wing, passing through the opening and in a space, is brought below a rib, the control member then being rotated so that the or each wing is progressively trapped below the or each rib.

2. A control member according to claim 1, characterized in that it comprises two thin wings (140) angularly offset by about 180° from each other, and two ribs (230) similarly angularly offset by about 180° from each other and defining two spaces (240) having the second angular extent.

3. A control member according to claim 1 or claim 2, characterized in that the or each wing (140) includes a circumferentially protruding lug (150) at one end.

4. A control member according to claim 3, characterized in that the or each protruding lug (150) has a free end which is situated below the plane of said wings.

5. A control member according to claim 4, characterized in that the or each protruding lug (150) has a sinuous profile with a continuous slope.

6. A control member according to any one of claims 1 to 5, characterized in that the control member (100) and the associated opening (210) have a rotational symmetry of 180°.

7. A control member according to any one of claims 1 to 6, characterized in that the central body (110) is surmounted by a disk-shaped portion (120) having a diameter (D1) substantially greater than that of the opening.

8. A control member according to claim 7, characterized in that a seal (160) is provided below the disk-shaped portion (120) and around said central body (110).

9. A control member according to any one of claims 1 to 8, characterized in that the coupling means includes, in the upper region of the central body, a cavity (112) for the insertion of a control tool.

10. A control member according to any one of claims 1 to 9, characterized in that the coupling means includes, in the lower region of the central body (110), a portion (130) for coupling the control member with an alignment adjusting device provided inside the headlight.

11. An assembly constituted by a control member (100) according to any one of the preceding claims and a headlight housing (200) including an opening such as defined in any preceding claim.

## Patentansprüche

1. Betätigungsstück (100), insbesondere für die Übertragung einer Drehbewegung zum Einstellen der Orientierung von Kraftfahrzeugscheinwerfern und für den Einbau in einer Öffnung (210) in einer Wand (200) des Scheinwerfers, bestehend aus einem Mittelkörper (110) mit Verbindungsmitteln (112; 130) für das Einsetzen in der Öffnung in einer nichtabmontierbaren Position , **dadurch gekennzeichnet,** daß ausgehend von dem Mittelkörper seitlich mindestens ein im wesentlichen ebener, dünner Flügel (140) vorspringt, der einen ersten Durchmesser (D4), der gleich oder etwas kleiner als ein Durchmesser (D10) der Öffnung ist, und eine erste Winkelausdehnung besitzt, und daß das Betätigungsstück mit einer Öffnung (210) zusammenwirken kann, die mindestens eine Rippe (230) umfaßt, welche sich von ihrer Umfangskante aus nach innen erstreckt und im Bereich ihrer Innenkante einen zweiten Durchmesser (D11) definiert, der kleiner als der genannte erste Durchmesser (D4) ist, wobei zwischen den Enden der Rippe bzw. der Rippen mindestens ein Zwischenraum (210) mit einer zweiten Winkelausdehnung definiert ist, die kleiner als die genannte erste Winkelausdehnung ist, wobei das Betätigungsstück schräg in der Öffnung in einer geradlinigen Bewegung positioniert werden kann, bei der ein Flügel, der durch die Öffnung im Bereich eines Zwischenraums hindurchgeht, unter eine Rippe geführt und anschließend verdreht wird, so daß der bzw. jeder Flügel fortschreitend unter der bzw. jeder Rippe eingreift.

2. Betätigungsstück nach Anspruch 1, **dadurch gekennzeichnet,** daß es zwei dünne Flügel (140) umfaßt, die um einen Winkel von etwa 180° zueinander versetzt sind, sowie zwei Rippen (230), die ebenfalls um einen Winkel von etwa 180° zueinander versetzt sind und die zwei Zwischenräume (240) mit der zweiten Winkelausdehnung (240) definieren.

3. Betätigungsstück nach Anspruch 1 oder 2, **dadurch gekennzeichnet,** daß der bzw. jeder Flügel (140) an einem Ende einen vorspringenden Ansatz (150) in Umfangsrichtung umfaßt.

4. Betätigungsstück nach Anspruch 2, **dadurch gekennzeichnet,** daß der bzw. jeder vorspringende Ansatz (150) ein freies Ende aufweist, das sich unterhalb der Ebene der genannten Flügel befindet.

5. Betätigungsstück nach Anspruch 4, **dadurch gekennzeichnet,** daß der bzw. jeder vorspringende Ansatz (150) ein gewundenes Profil ohne Steigungsunterbrechung aufweist.

6. Betätigungsstück nach einem der Ansprüche 1 bis 5, **dadurch gekennzeichnet,** daß das Betätigungsstück (100) und die zugehörige Öffnung (210) eine Rotationssymmetrie von 180° aufweisen.

7. Betätigungsstück nach einem der Ansprüche 1 bis 6, **dadurch gekennzeichnet,** daß der Mittelkörper (110) durch einen scheibenförmigen Teil (120) mit einem Durchmesser (D1) überragt wird, der deutlich größer als der Durchmesser der Öffnung ist.

8. Betätigungsstück nach Anspruch 7, **dadurch gekennzeichnet,** daß eine Dichtung (160) unterhalb des scheibenförmigen Teils (120) und um den genannten Mittelkörper (110) herum vorgesehen ist.

9. Betätigungsstück nach einem der Ansprüche 1 bis 8, **dadurch gekennzeichnet,** daß die Verbindungsmittel im oberen Bereich des Mittelkörpers eine Vertiefung (112) für die Einführung eines Verstellwerkzeugs umfassen.

10. Betätigungsstück nach einem der Ansprüche 1 bis 9, **dadurch gekennzeichnet,** daß die Verbindungsmittel im unteren Bereich des Mittelkörpers (110) einen Teil (130) für die Verbindung des Betätigungsstücks mit einer im Innern des Scheinwerfers vorgesehenen Vorrichtung zum Einstellen der Orientierung umfassen.

11. Einheit, bestehend aus einem Betätigungsstück (100) nach einem der vorangehenden Ansprüche und aus einem Scheinwerfergehäuse (200) mit einer Öffnung, wie sie in einem der vorangehenden Ansprüche definiert wird.
